# EUROPÄISCHE PATENTSCHRIFT

(11) **EP 3 683 103 B1**
(45) Veröffentlichungstag und Bekanntmachung des Hinweises auf die Patenterteilung: **08.11.2023**
(21) Anmeldenummer: 19164270.1
(22) Anmeldetag: 21.03.2019
(51) Int. Cl.: B60S 3/06

(54) **VORRICHTUNG ZUM WASCHEN EINES FAHRZEUGS**
DEVICE FOR WASHING A VEHICLE
DISPOSITIF DE LAVAGE D'UN VÉHICULE

(30) Priorität: 16.01.2019 DE 102019101052
(43) Veröffentlichungstag der Anmeldung: 22.07.2020
(73) Patentinhaber: Stegemann, René, 52538 Gangelt (DE)
(72) Erfinder: Stegemann, René, 52538 Gangelt (DE)
(74) Vertreter: terpatent Patentanwälte ter Smitten Eberlein-Van Hoof Rütten Daubert

(56) Entgegenhaltungen:
- EP-A1- 0 811 537
- DE-A1- 1 630 469
- FR-A1- 2 284 487
- US-A1- 2004 237 232

## Beschreibung

Die Erfindung betrifft eine Vorrichtung zum Waschen von Fahrzeugen mit einer um ihre Drehachse rotierenden und in Richtung ihrer Drehachse bewegbaren Waschwalze, einer Antriebsvorrichtung, welche mit einer Trägerwelle der Waschwalze gekoppelt ist und über welche die Waschwalze rotatorisch betätigbar ist, wobei die Waschwalze im Waschvorgang mit einer Anpresskraft an einer zu reinigenden Fahrzeugoberfläche anliegt, und einer pneumatischen oder hydraulischen Betätigungsvorrichtung, welche mit der Trägerwelle der Waschwalze gekoppelt ist und über welche die Waschwalze in Richtung ihrer Drehachse bewegbar ist.

Die Vorrichtungen zum Waschen von Fahrzeugen werden grundsätzlich in Portalwaschanlagen und Waschstraßen unterteilt. Bei einer Portalwaschanlage wird das Fahrzeug vor dem Waschvorgang in der Waschanlage abgestellt und die Waschvorrichtung mit ihren Waschwalzen bewegt sich während dem Waschvorgang relativ zum stillstehenden Fahrzeug. Bei einer Waschstraße wird das Fahrzeug mittels eines Förderbandes durch die Waschvorrichtung geschleppt, wobei die Vorrichtung stillsteht. In beiden Varianten der Waschanlage führen die Waschwalzen zum Reinigen der Fahrzeugoberfläche eine Rotationsbewegung und eine translatorische Bewegung quer zur Drehachse der Waschwalze aus, wodurch ein gutes Waschergebnis an glatten und ebenen Fahrzeugoberflächen erzielt wird. Bei Fahrzeugoberflächen mit hervorstehenden Elementen, wie beispielsweise Zierleisten, Seitenspiegeln oder Spoilerelementen, oder eingezogenen Bereichen der Fahrzeugoberfläche entstehen sogenannte Waschschatten, wobei das Waschergebnis in den Waschschatten ungenügend ist. Die Waschschatten sind darauf zurückzuführen, dass die Waschelemente der Waschwalze durch die hervorstehenden Elemente oder die eingezogenen Bereiche der Fahrzeugoberfläche aufgespreizt und/oder zur Seite gedrängt werden.

Die EP 0 811 537 B1 offenbart eine Vorrichtung, die derartige Waschschatten vermeiden soll, wobei die Vorrichtung mindestens eine Waschwalze aufweist, welche eine Vielzahl von Waschelementen, wie beispielsweise Borsten, Lappen oder Streifen, aufweist. Im Waschvorgang führt die Waschwalze eine Rotations- sowie eine Translationsbewegung quer zur Drehachse der Waschwalze durch, wobei durch die Translationsbewegung quer zur Drehachse der Abstand zwischen der Waschwalze und der zu reinigenden Fahrzeugoberfläche verändert wird und dadurch die Anpresskraft zwischen der Waschwalze und der Fahrzeugoberfläche variiert wird. Zur Verminderung der Waschschatten bewegt sich die Waschwalze zusätzlich in Richtung ihrer Drehachse, wobei durch die Überlagerung der Rotationsbewegung und der Bewegung in Richtung der Drehachse das Aufspreizen der Waschelemente durch die hervorstehenden Elemente oder die eingezogenen Bereiche der Fahrzeugoberfläche vermindert wird. Zur Betätigung der Bewegung der Waschwalze in Richtung ihrer Drehachse ist ein Pneumatik- oder ein Hydraulikzylinder vorgesehen, wobei ein in dem Zylinder angeordneter Kolben mit der Trägerwelle der Waschwalze verbunden ist, und wobei die Waschwalze durch die Veränderung des im Zylinder herrschenden Drucks verstellt wird. Alternativ ist die Welle der Waschwalze über eine wellenförmig verlaufende Steuerkulisse gelagert, wobei durch die Rotation der Trägerwelle bzw. der Waschwalze um ihre Drehachse eine ständige und konstante Hin- und Herbewegung der Welle und damit der Waschwalze in Richtung der Drehachse erzeugt wird.

Nachteilig an der in der EP 0 811 537 B1 offenbarten Ausführung ist, dass das Waschergebnis in den Bereichen mit hervorstehenden Elementen und in den eingezogenen Bereichen trotz der Hin- und Herbewegung der Waschwalze in Richtung ihrer Drehachse nicht ausreichend ist.

Der Erfindung liegt daher die Aufgabe zugrunde, das Waschergebnis in den Bereichen der hervorstehenden Elemente und in den eingezogenen Bereichen der Fahrzeugoberfläche weiter zu verbessern.

Diese Aufgabe wird durch eine Vorrichtung zum Waschen von Fahrzeugen mit den Merkmalen des Hauptanspruchs gelöst. Dadurch, dass die Frequenz und/oder der Hub der Bewegung in Richtung der Drehachse in Abhängigkeit von der Anpresskraft der Waschwalze verstellbar ist, wird das Waschergebnis in den Bereichen der hervorstehenden Elemente und in den eingezogenen Bereichen verbessert, indem durch eine Veränderung der Anpresskraft ein hervorstehendes Element oder ein eingezogenes Element erkannt wird und die Frequenz und/oder der Hub der Bewegung der Waschwalze in Richtung der Drehachse entsprechend verändert wird. Dabei wird insbesondere bei einem Anstieg der Anpresskraft aufgrund eines hervorstehenden Elements der Hub der Bewegung in Richtung der Drehachse der Waschwalze erhöht und dadurch das Ausspreizen der Waschelemente vermindert, wobei die Waschelemente das hervorstehende Element vollständig umgreifen und dadurch eine Wischbewegung im Schatten des hervorstehenden Elements erzeugen.

Vorzugsweise ist eine Hin- und Herbewegung der Waschwalze in Richtung ihrer Drehachse durch ein Abwechseln zwischen einem Minimaldruck und einem Maximaldruck der hydraulischen und pneumatischen Betätigungsvorrichtung erzeugbar. Dadurch kann eine Hin- und Herbewegung der Waschwalzen verschleißarm während dem gesamten Waschvorgang erzeugt werden.

In einer bevorzugten Ausgestaltung ist eine Trägerwelle der Waschwalze über eine Hülse mit der Antriebsvorrichtung drehfest verbunden, wobei in den Hohlraum der Hülse die Trägerwelle eingreift, wobei die Trägerwelle drehfest mit der Hülse verbunden ist und in Richtung der Drehachse relativ zur Hülse verschiebbar ist. Dadurch wird, trotz einer Überlagerung einer Translations- und einer Rotationsbewegung der Trägerwelle, eine Anbindung der Trägerwelle an die Antriebsvorrichtung hergestellt.

In einer vorteilhaften Ausgestaltung weist die Hülse zur drehfesten Verbindung mit der Trägerwelle ein in Richtung der Drehachse axial erstreckendes Langloch auf, wobei in das Langloch ein mit der Welle fest verbundenes Eingriffselement eingreift. Alternativ weist die Hülse zur drehfesten Verbindung mit der Trägerwelle eine Innenverzahnung und die Trägerwelle eine zur Innenverzahnung korrespondierende Außenverzahnung auf. Durch eine derartige Ausgestaltung der Hülse wird auf eine einfache und kostengünstige Weise zum einen eine drehfeste Verbindung der Trägerwelle mit der Antriebsvorrichtung hergestellt und zum anderen eine vordefinierte, translatorische Bewegung der Trägerwelle relativ zur Hülse ermöglicht.

Vorzugsweise ist die Trägerwelle als Hohlwelle ausgeführt, wobei die pneumatische oder die hydraulische Betätigungsvorrichtung in dem Hohlraum der Trägerwelle angeordnet ist, wobei in den Hohlraum der Trägerwelle eine durch die Antriebsvorrichtung angetriebene Innenwelle eingreift, welche drehfest mit der Trägerwelle verbunden ist und relativ zur Trägerwelle axial verschiebbar ist, wobei eine der beiden Wellen, also die Trägerwelle oder die Innenwelle, eine Fluidkammer der pneumatischen oder die hydraulischen Betätigungsvorrichtung aufweist und die andere Welle mit einem Kolben der pneumatischen oder hydraulischen Betätigungsvorrichtung verbunden ist. Durch die Integration der pneumatischen oder hydraulischen Betätigungsvorrichtung in der Trägerwelle kann der Bauraum der Vorrichtung verkleinert werden.

Vorzugsweise ist die Anpresskraft durch eine Messung des Motorstroms der Antriebsvorrichtung ermittelbar und in Abhängigkeit von dem gemessenen Motorstrom der Maximalruck der pneumatischen oder hydraulischen Betätigungsvorrichtung einstellbar. Dadurch kann auf eine einfache Weise die Anpresskraft ermittelt werden und basierend darauf die Frequenz bzw. der Hub der Waschwalze entsprechend eingestellt werden. Die pneumatische oder hydraulische Betätigungsvorrichtung ist über ein Steuergerät mit der Antriebsvorrichtung verbunden.

Vorzugsweise weist die Trägerwelle der Waschwalze ein erstes Wellenelement und ein zweites Wellenelement auf, wobei das erste Wellenelement mit einer Hülse drehfest verbunden ist und in den Hohlraum der Hülse das zweite Wellenelement eingreift, wobei die Hülse eine helixartige Steuernut mit einer tangentialen und axialen Erstreckung aufweist und das zweite Wellenelement ein mit der Steuernut korrespondierendes Eingriffselement aufweist, wobei das erste Wellenelement durch ein Vorspannelement axial gegen das zweite Wellenelement vorgespannt ist. Eine Steuernut ist helixartig, wenn sie sich mit einer definierten Steigung um den Mantel eines Zylinders windet. Dadurch kann eine direkte Abhängigkeit zwischen der Anpresskraft und der Höhe des Hubs hergestellt werden. Dabei addieren sich der durch die pneumatische oder hydraulische Betätigungsvorrichtung erzeugte, gleichbleibende Hub und der von der Anpresskraft abhängige Hub, so dass die Höhe des Gesamthubs unmittelbar von der Anpresskraft abhängt.

Vorzugsweise ist das zweite Wellenelement relativ zum ersten Wellenelement aus einer Anschlagstellung in eine Verstellstellung verdrehbar, wobei in der Anschlagstellung die durch das Vorspannelement und durch die helixartige Steuernut wirkende Kraft in Umfangsrichtung mindestens der durch das aus der Anpresskraft resultierende Drehmoment und durch die helixartige Steuernut wirkende Kraft in Umfangsrichtung entspricht, und wobei in der Verstellstellung die durch das Vorspannelement und durch die helixartige Steuernut wirkende Kraft in Umfangsrichtung kleiner ist als die durch das aus der Anpresskraft resultierende Drehmoment und durch die helixartige Steuernut wirkende Kraft in Umfangsrichtung. Dadurch wird eine Kopplung zwischen der Anpresskraft und der Höhe des Hubs der Waschwalze hergestellt, wobei ab einer durch das Vorspannelement vordefinierten Anpresskraft sich das zweite Wellenelement aus der Anschlagstellung in die Verstellstellung bewegt. Dabei überlagern sich die die durch das Vorspannelement erzeugte Kraft in Umfangsrichtung, die durch die Anpresskraft erzeugte Kraft in Umfangsrichtung und die durch die pneumatische oder hydraulische Betätigungsvorrichtung erzeugte Kraft in Umfangsrichtung mit einem sinusförmigen Verlauf. Die durch die pneumatische oder hydraulische Betätigungsvorrichtung erzeugte, sinusförmige Kraft bewirkt zusätzlich zu der ursprünglichen Hin- und Herbewegung, dass das Eingriffselement durch den sinusförmigen Verlauf sich entlang der helixartigen Steuernut hin- und herbewegt. Die Höhe des Hubs der Waschwalze bei einer erhöhten Anpresskraft ergibt sich durch die ursprüngliche Hin- und Herbewegung der Waschwalze und zusätzlich durch die Hin- und Herbewegung des Eingriffselements entlang der Steuernut in der zweiten Stellung.

Vorzugsweise ist die Trägerwelle durch ein Vorspannelement in Richtung ihrer Drehachse und entgegen der Kraft der pneumatischen oder hydraulischen Betätigungsvorrichtung vorgespannt. Dadurch wird die Trägerwelle und ein an der Trägerwelle angeordnetes Eingriffselement in eine Grundstellung gedrückt, wobei zur Verstellung der Waschwalze in Richtung ihrer Drehachse die Trägerwelle durch die pneumatische oder hydraulische Betätigungsvorrichtung nur in eine Richtung, entgegen der Federkraft, belastet werden muss.

In einer bevorzugten Ausgestaltung sind die Vorspannelemente Federn, wodurch die Vorspannung einfach und kostengünstig erzeugt werden kann.

Vorzugsweise weisen die Vorspannelemente eine degressive oder progressive Federkennlinie auf. Ein Vorspannelement mit einer degressiven Federkennlinie führt dazu, dass mit der Erhöhung der auf das Vorspannelement wirkenden Kraft der Federweg überproportional ansteigt. Bei einem Vorspannelement mit einer progressiven Federkennlinie erhöht sich der Federweg mit der Erhöhung der auf das Vorspannelement wirkenden Kraft unterproportional. Auf diese Weise kann der Hub in Abhängigkeit von der Anpresskraft nochmals erhöht werden.

Es wird somit eine Vorrichtung zum Waschen eines Fahrzeugs geschaffen, bei der das Waschergebnis in den Bereichen der hervorstehenden Elemente und in den eingezogenen Bereichen der Karosserieoberfläche verbessert wird.
Figur 1 zeigt eine schematische Ansicht einer ersten Ausführung einer Vorrichtung zum Waschen eines Fahrzeugs.
Figur 2 zeigt eine schematische Ansicht einer zweiten Ausführung einer Vorrichtung zum Waschen eines Fahrzeugs.
Figur 3 zeigt eine schematische Ansicht einer alternativen Ausführung einer Trägerwelle einer Waschwalze der Vorrichtung aus Figur 1.

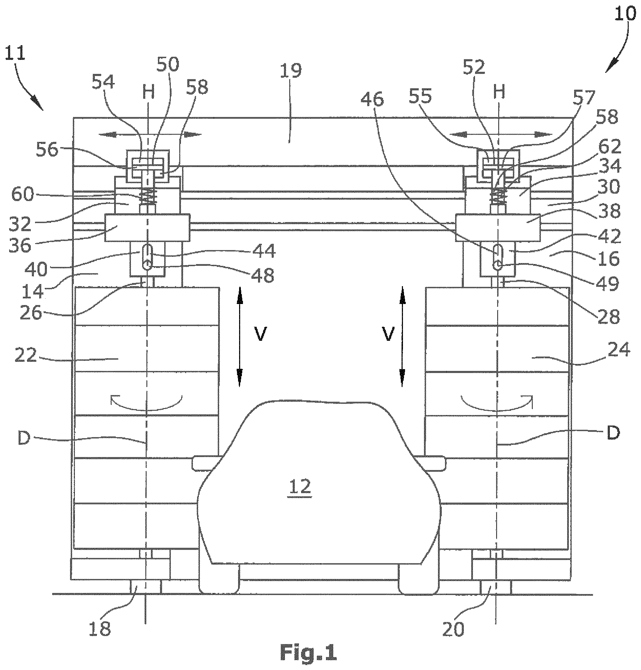

Die Figur 1 zeigt schematisch eine Vorrichtung 10 zum Waschen eines Fahrzeugs 12. Die Vorrichtung 10 ist ein Waschportal 11 einer Portalwaschanlage, wobei sich das Waschportal 11 zu dem stillstehenden Fahrzeug 12 relativ bewegt. Alternativ wird ein derartiges Waschportal 11 bei einer Waschstraße eingesetzt, wobei das Waschportal 11 stillsteht und das Fahrzeug 12 mittels eines Förderbandes durch das Waschportal 11 hindurchgeschleppt wird.

Das Waschportal 11 weist zwei Vertikalträger 14, 16 und einen Querträger 19 auf, wobei der Querträger 19 die beiden Vertikalträger 14, 16 miteinander verbindet. Das Waschportal 11 ist über die zwei Vertikalträger 14, 16 auf zwei Laufschienen 18, 20 verschiebbar gelagert und wird mittels einer in den Figuren nicht dargestellten Antriebseinheit in Fahrzeuglängsrichtung angetrieben und bewegt.

Die Figur 1 zeigt das Waschportal 11 mit zwei, seitlich am Fahrzeug 12 angeordneten Waschwalzen 22, 24. Die Waschwalzen 22, 24 umfassen jeweils eine Trägerwelle 26, 28 und eine Vielzahl einzelner Waschelemente, beispielsweise Borsten, Textil-Lappen, Textil- oder Schaumstoffstreifen oder Fellstreifen, wobei die Waschelemente an der Außenumfangsfläche der Trägerwelle 26, 28 befestigt sind. Die Trägerwellen 26, 28 der Waschwalzen 22, 24 sind über jeweils ein an einer Führungsschiene 30 gelagertes Stellorgan 32, 34 positionsveränderlich gehalten, wobei die Waschwalzen 22, 24 über das jeweilige Stellorgan 32, 34 in Fahrzeugquerrichtung H verschoben werden können. Zusätzlich können die Waschwalzen 22, 24 relativ zur Vertikalachse geneigt werden. Die beiden Trägerwellen 26, 28 sind mit jeweils einer Antriebsvorrichtung 36, 38 verbunden, wobei durch die Antriebsvorrichtungen 36, 38 die jeweiligen Trägerwellen 26, 28 und damit die Waschwalzen 22, 24 rotatorisch angetrieben werden.

Die Antriebsvorrichtung 36, 38 weist üblicherweise einen Elektromotor und ein Getriebe auf, wobei das Getriebe zwischen dem Elektromotor und der Trägerwelle 26, 28 zwischengeschaltet ist. Durch das Getriebe wird die Drehzahl des Elektromotors auf eine für den Waschvorgang nutzbare Drehzahl der Waschwalzen 22, 24 untersetzt.

Im Waschvorgang überlagern sich die Translationsbewegung des Waschportals 11 in Fahrzeuglängsrichtung, die Rotationsbewegung der Waschwalzen 22, 24 und die Translationsbewegung der Waschwalzen 22, 24 in Fahrzeugquerrichtung H. Der eigentliche Waschvorgang der Fahrzeugoberfläche erfolgt durch die Rotationsbewegung der Waschwalzen 22, 24, wobei das Waschergebnis von der Anpresskraft zwischen den Waschwalzen 22, 24 und der zu reinigenden Fahrzeugoberfläche abhängt. Die Anpresskraft kann durch die Verschiebung der Waschwalzen 22, 24 in Fahrzeugquerrichtung H variiert werden. Die Anpresskraft variiert im Waschvorgang in Abhängigkeit von der zu reinigenden Fahrzeugoberfläche und wird während dem gesamten Waschvorgang erfasst und überwacht. Für ein gutes Waschergebnis muss während dem gesamten Waschvorgang eine vordefinierte Mindest-Anpresskraft vorliegen. Gleichzeitig darf eine Maximal-Anpresskraft nicht überschritten werden, da sonst Beschädigungen an der zu reinigenden Fahrzeugoberfläche entstehen können.

In den Bereichen der Fahrzeugoberfläche mit hervorstehenden Elementen, wie beispielsweise Zierleisten, Seitenspiegeln oder Spoilerelementen, oder in den eingezogenen Bereichen der Fahrzeugoberfläche entstehen sogenannte Waschschatten, wobei die Waschelemente der Waschwalzen 22, 24 zur Seite gedrängt werden und das Waschergebnis in diesen Bereichen ungenügend ist. Um derartige Waschschatten zu verhindern, wird zum einen die Anpresskraft in den Bereichen der hervorstehenden Elemente erhöht und zum anderen führen die Waschwalzen 22, 24 zusätzlich eine axial Hin- und Herbewegung in Richtung ihrer Drehachse D durch. Hierfür ist die Trägerwelle 26, 28 in Richtung der Drehachse D der Waschwalze 22, 24 verschiebbar gelagert und über jeweils eine Hülse 40, 42 mit der jeweiligen Antriebsvorrichtung 36, 38 verbunden. Die Hülse 40, 42 ist drehfest mit der Antriebsvorrichtung 36, 38 verbunden und wird durch diese angetrieben. Die Hülse 40, 42 weist ein in Richtung der Drehachse D orientiertes Langloch 44, 46 auf, in welches ein Eingriffselement 48, 49 eingreift, wobei das Eingriffselement 48, 49 mit der entsprechenden Trägerwelle 26, 28 drehfest verbunden ist. Die Breite des Langlochs 44, 46 ist unwesentlich größer als die Breite des Eingriffselements 48, 49, so dass eine Bewegung der Trägerwelle 26, 28 relativ zur Hülse 40, 42 nur in Richtung der Drehachse D möglich ist. Das Eingriffselement 48, 49 ist als Gleitstein oder als Rolle, welche drehbar an einem Vorsprung der Trägerwelle 26, 28 gelagert ist, ausgeführt.

Die drehmomentübertragende Verbindung zwischen der Trägerwelle 26, 28 und der Hülse 40, 42 kann alternativ durch eine Verzahnung hergestellt werden, wobei die Trägerwelle 26, 28 eine Außenverzahnung und die Hülse 40, 42 eine zur Außenverzahnung korrespondierende Innenverzahnung aufweist.

Die Verstellung der Waschwalzen 22, 24 in Richtung ihrer Drehachse D erfolgt durch jeweils eine pneumatische Betätigungsvorrichtung 50, 52. Die pneumatische Antriebsvorrichtung 50, 52 ist drehfest mit einem Ende der Trägerwelle 26, 28 verbunden. Das entgegengesetzte Ende der Trägerwelle 26, 28 ist drehbar und in Richtung der Drehachse D verschiebbar am Vertikalträger 14, 16 gelagert.

Die pneumatische Betätigungsvorrichtung 50, 52 weist eine Fluidkammer 54, 55 auf, welche mit einer in der Figur nicht gezeigten Druckluftleitung verbunden ist und in welcher ein Kolben 56, 57 verschiebbar angeordnet ist. Der Kolben 56, 57 ist über eine Kolbenstange 58, 59 mit einem Ende der Trägerwelle 26, 28 verbunden, wobei nur Kräfte in Richtung der Drehachse D übertragen werden können. Die Trägerwelle 26, 28 ist durch jeweils ein Vorspannelement 60, 62 in eine Grundstellung vorgespannt, wobei das Vorspannelement 60, 62 zwischen der Trägerwelle 26, 28 und dem jeweiligen Stellorgan 32, 34 gespannt ist.

Zur Verstellung der Waschwalze 22, 24 in Richtung ihrer Drehachse D wird ausgehend von einem Minimaldruck der Luftdruck in der Fluidkammer 54, 55 auf einen Maximaldruck erhöht und dadurch eine Kraft entgegen der Federkraft erzeugt. Sobald die durch die Luftdruckerhöhung erzeugte Kraft die Federkraft des Vorspannelements 60, 52 übersteigt, erfolgt eine Bewegung des Eingriffselements 48, 49 und somit der Waschwalze 22, 24 in Richtung ihrer Drehachse D. Entsprechend verschiebt sich das Eingriffselement 48, 49 bzw. die Waschwalze 22, 24 wieder in ihre Grundstellung sobald sich der Druck in der Fluidkammer 54, 55 auf den Minimaldruck absinkt. So wird durch eine wiederholende Luftdruckveränderung in der Fluidkammer 54, 55 zwischen dem Minimal- und dem Maximaldruck eine Hin- und Herbewegung der Waschwalzen 22, 24 erzeugt. Die Luftdruckänderungen in der Fluidkammer 54, 55 können durch ein Magnetventil realisiert werden.

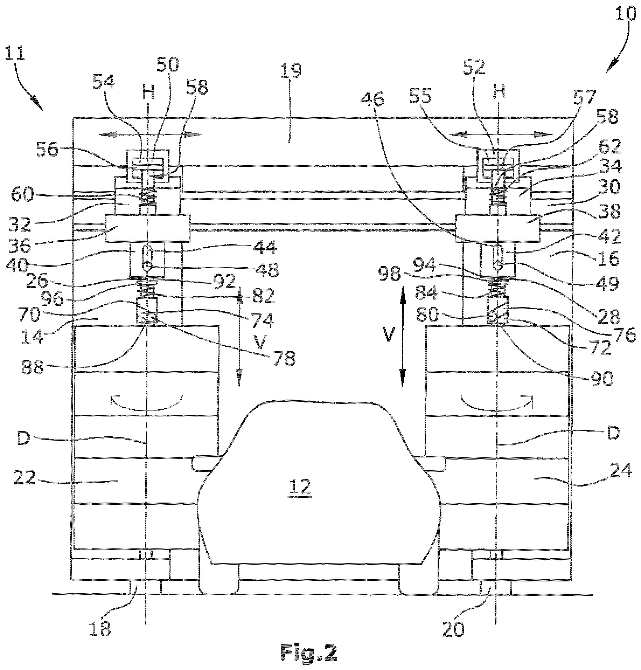

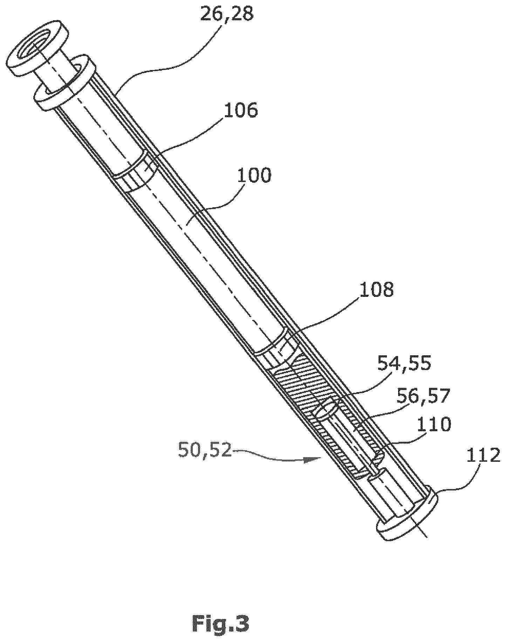

Alternativ ist die pneumatische Betätigungsvorrichtung 50, 52 innerhalb der Trägerwelle 26, 28 angeordnet. Figur 3 zeigt eine derartige Trägerwelle 26, 28, wobei die Trägerwelle 26, 28 als Hohlwelle mit einem ringförmigen Querschnitt ausgeführt ist. An einer ersten Stirnseite der Trägerwelle 26, 28 greift eine zylindrisches Innenwelle 100 in den Hohlraum der Trägerwelle 26, 28 ein, wobei der Spalt zwischen der Trägerwelle 26, 29 und der zylindrische Innenwelle 100 flüssigkeitsdicht abgedichtet ist. An dem in den Hohlraum der Trägerwelle 26, 28 eingreifenden Abschnitt der zylindrischen Innenwelle 100 sind zwei, drehmomentübertragende Hülsen 106, 108 befestigt, welche an ihrer Außenfläche eine Außenverzahnung aufweisen, wobei die Außenverzahnungen mit einer an der Innenfläche der Trägerwelle 26, 28 ausgebildete Innenverzahnung zusammenwirken. Alternativ kann zur Drehmomentübertragung zwischen der Innenwelle 100 und der Trägerwelle 26, 28 jede andere bekannte formschlüssige Verbindung vorgesehen werden. Die zylindrische Innenwelle 100 ist mit seinem aus dem Hohlraum erstreckenden Abschnitt direkt mit der Antriebsvorrichtung 36, 38 fest verbunden, so dass im Vergleich zu den in Figur 1 und 2 gezeigten Ausführungen die Hülse 40, 42 entfällt.

Die pneumatische Betätigungsvorrichtung 50, 52 weist eine Fluidkammer 54, 55 und einen in der Fluidkammer 54, 55 translatorisch verschiebbaren Kolben 56, 57 auf, wobei die Fluidkammer 54, 55 in der Innenwelle 100 ausgeführt ist und der Kolben 56, 57 über eine Kolbenstange 110 am Boden 112 der Trägerwelle 26, 28 fest verbunden ist. Die Trägerwelle 26, 28 ist an dem der Antriebsvorrichtung 36, 38 abgewandten axialen Ende drehbar und axial verschiebbar an dem Vertikalträger 14, 16 gelagert.

Bei einer Betätigung der pneumatischen Betätigungsvorrichtung 50, 52 verschiebt sich die Trägerwelle 26, 28 relativ zum zylindrischen Element 100 und zu den fest mit dem zylindrischen Element 100 verbundenen Hülsen 106, 108, wobei die Innenfläche des Trägerelements 26, 28 auf den Hülsen 106, 108 in Axialrichtung gleitet. Die Hin- und Herbewegung der Waschwalze 22, 24 in Richtung ihrer Drehachse D wird durch den wiederholenden Wechsel von einem Minimaldruck in der Fluidkammer 54, 55 auf einen Maximaldruck erreicht. Es kann zusätzlich ein Vorspannelement zum axialen Vorspannen der Waschwalze 22, 24 vorgesehen werden, wobei die Federkraft des Vorspannelements entgegen der durch die pneumatische Betätigungsvorrichtung 50, 52 erzeugten Axial kraft wirkt.

Erfindungsgemäß ist der Hub der Bewegung in Richtung der Drehachse D von der Anpresskraft zwischen der Waschwalze 22, 24 und der Fahrzeugoberfläche des Fahrzeugs 12 abhängig. Eine derartige Abhängigkeit wird dadurch erreicht, dass durch den erfassten Motorstrom des Elektromotors der Antriebsvorrichtung 36, 38 auf die Anpresskraft geschlossen wird, basierend darauf der Maximaldruck in der Fluidkammer 54, 55 der pneumatischen Betätigungsvorrichtung 50, 52 verändert wird und dadurch der Hub der Waschwalze 22, 24 durch die Luftdruckerhöhung in der Fluidkammer 54, 55 verändert wird. Der Hub der Bewegung in Richtung der Drehachse D wird erhöht, wenn zur Verbesserung der Waschwirkung im Bereich eines hervorstehenden Elements, beispielsweise eines Seitenspiegels, die Anpresskraft erhöht wird. Dabei wird die Waschwirkung durch die Erhöhung der Anpresskraft und zusätzlich durch die Erhöhung des Hubs der Waschwalzen 22, 24 verbessert. Gleichermaßen kann auch die Frequenz der Bewegung in Richtung der Drehachse D der Waschwalze 22, 24 in Abhängigkeit von der Anpresskraft erhöht oder reduziert werden.

Eine alternative Ausführung der in Figur 1 gezeigten Ausgestaltung zeigt die Figur 2. Dabei wird anstatt der Veränderung des Maximaldrucks zur Verstellung des Hubs eine direkte Abhängigkeit zwischen der Anpresskraft und der Höhe des Hubs mechanisch hergestellt, wobei eine voreingestellte Hin- und Herbewegung durch die wiederholende Druckänderung in der Fluidkammer 54, 55 der pneumatischen Betätigungsvorrichtung 50, 52 erfolgt.

Hierbei sind die Trägerwellen 26, 28 jeweils in ein erstes Wellenelement 88, 90 und ein zweites Wellenelement 92, 94 unterteilt. An dem ersten Wellenelement 88, 90 ist eine Hülse 70, 72 drehfest angeordnet, wobei in die Hülse 70, 72 das zweite Wellenelement 92, 94 abschnittsweise eingreift. An der Umfangsfläche des zweiten Wellenelements 92, 94 ist ein Eingriffselement 78, 80 ausgebildet bzw. befestigt, welches in eine an der Hülse 70, 72 ausgebildete, helixartige Steuernut 74, 76 eingreift. Zwischen einem axialen Ende der Hülse 70, 72 und einem am zweiten Wellenelement 92, 94 ausgebildeten Vorsprung 96, 98 ist ein als Feder ausgeführtes Vorspannelement 82, 84 angeordnet, wodurch das erste Wellenelement 88, 90 gegen das zweite Wellenelement 92, 94 axial vorgespannt ist. Durch das Vorspannelement 82, 84 wird das Eingriffselement 78, 80 in einer Anschlagstellung gegen einen Anschlag gedrückt, wobei in der Anschlagstellung die durch das Vorspannelement 82, 84 erzeugte Kraft in Umfangsrichtung die durch die Anpresskraft erzeugte Kraft übersteigt, wobei die durch das Vorspannelement 82, 84 erzeugte Axialkraft durch die helixartige Steuernut 74, 76 in eine Kraft in Umfangsrichtung teilweise umgewandelt wird. Dadurch wird erreicht, dass bei einer reduzierten Anpresskraft sich der Hub der Waschwalzen 22, 24 nur durch die ursprüngliche Hin- und Herbewegung der Waschwalzen aufgrund der Betätigung der pneumatischen Betätigungsvorrichtung 50, 52 ergibt. Sobald die durch die Anpresskraft wirkende Kraft in Umfangsrichtung die durch das Vorspannelement 82, 84 wirkende Kraft in Umfangsrichtung übersteigt, dreht sich das zweite Wellenelement 92, 94 relativ zum ersten Wellenelement 88, 90. Dabei wird das Eingriffselement 78, 80 entlang der helixartigen Steuernut 74, 76 in eine Verstellstellung bewegt und die Waschwalze 22, 24 führt aufgrund der helixartigen Steuernut 74, 76 eine kombinierte Rotations- und Axialbewegung durch.

In der Verstellstellung überlagern sich die durch das Vorspannelement 82, 84 erzeugte Kraft in Umfangsrichtung, die durch die Anpresskraft erzeugte Kraft in Umfangsrichtung und die durch die pneumatische oder hydraulische Betätigungsvorrichtung 50, 52 erzeugte Kraft in Umfangsrichtung mit einem sinusförmigen Verlauf. Die durch die pneumatische oder hydraulische Betätigungsvorrichtung 50, 52 erzeugte, sinusförmige Kraft bewirkt, zusätzlich zu der ursprünglichen Hin- und Herbewegung der Waschwalze 22, 24, dass das Eingriffselement 78, 80 sich durch die sich ändernde Anpresskräfte und daraus folgenden, sich ändernden Drehmomente auch entlang der helixartigen Steuernut 74, 76 hin- und herbewegt. Dadurch ergibt sich die Höhe des Hubs in der Verstellstellung durch die Addition der ursprünglichen Hin- und Herbewegung der Waschwalze 22, 24 und die Hin- und Herbewegung des Eingriffselement 78, 80 entlang der Steuernut 74, 76.

Mit der in Figur 1 gezeigten, ersten Ausführung der Vorrichtung kann auf eine kostengünstige und bauraumsparende Weise der Hub der Waschwalze 22, 24 in Richtung ihrer Drehachse D in Abhängigkeit von der Anpresskraft verstellt werden, wobei lediglich über die Luftdruckänderung der pneumatischen Betätigungsvorrichtung 50, 52 die Veränderung des Hubs erfolgt und keine zusätzlichen Komponenten benötigt werden.

Mit der in Figur 2 gezeigten, zweiten Ausführung der Vorrichtung erfolgt eine Veränderung des Hubs der Waschwalze 22, 24 in Richtung ihrer Drehachse D automatisch und ohne, dass der Luftdruck der pneumatischen Betätigungsvorrichtung 50, 52 verändert werden muss. Es müssen keine zusätzlichen Steuerungsleitungen und Steuerungsfunktionen vorgesehen werden.

Es sollte deutlich sein, dass auch andere konstruktive Ausführungsformen im Vergleich zur beschriebenen Ausführungsform möglich sind, ohne den Schutzbereich des Hauptanspruchs zu verlassen. Es können beispielsweise die pneumatische Betätigungsvorrichtung oder die Hülse anders ausgeführt sein.

## Patentansprüche

1. Vorrichtung zum Waschen von Fahrzeugen mit
einer um ihre Drehachse rotierenden und in Richtung ihrer Drehachse bewegbaren Waschwalze (22, 24),
einer Antriebsvorrichtung (36, 38), welche mit einer Trägerwelle (26, 28) der Waschwalze (22, 24) gekoppelt ist und über welche die Waschwalze (22, 24) rotatorisch betätigbar ist, wobei die Waschwalze (22, 24) im Waschvorgang mit einer Anpresskraft an einer zu reinigenden Fahrzeugoberfläche anliegt, und
einer pneumatischen oder hydraulischen Betätigungsvorrichtung (50, 52), welche mit der Trägerwelle (26, 28) der Waschwalze (22, 24) gekoppelt ist und über welche die Waschwalze (22, 24) in Richtung ihrer Drehachse bewegbar ist,
**dadurch gekennzeichnet, dass**
die Frequenz und/oder der Hub der Bewegung in Richtung der Drehachse in Abhängigkeit von der Anpresskraft der Waschwalze (22, 24) verstellbar ist.

2. Vorrichtung nach Anspruch 1,
**dadurch gekennzeichnet, dass**
eine Hin- und Herbewegung der Waschwalze (22, 24) in Richtung ihrer Drehachse durch ein Abwechseln zwischen einem Minimaldruck und einem Maximaldruck der hydraulischen oder pneumatischen Betätigungsvorrichtung (50, 52) erzeugbar ist.

3. Vorrichtung nach Anspruch 1 oder 2,
**dadurch gekennzeichnet, dass**
die Trägerwelle (26, 28) der Waschwalze (22, 24) über eine Hülse (40, 42) mit der Antriebsvorrichtung (36, 38) drehfest verbunden ist, wobei in den Hohlraum der Hülse (40, 42) die Trägerwelle (26, 28) eingreift, wobei die Trägerwelle (26, 28) drehfest mit der Hülse (40, 42) verbunden ist und in Richtung der Drehachse relativ zur Hülse (40, 42) verschiebbar ist.

4. Vorrichtung nach Anspruch 3,
**dadurch gekennzeichnet, dass**
die Hülse (40, 42) zur drehfesten Verbindung mit der Trägerwelle (26, 28) ein in Richtung der Drehachse axial erstreckendes Langloch (44, 46) aufweist, wobei in das Langloch (44, 46) ein mit der Trägerwelle (26, 28) fest verbundenes Eingriffselement (48, 49) eingreift.

5. Vorrichtung nach Anspruch 3,
**dadurch gekennzeichnet, dass**
die Hülse (40, 42) zur drehfesten Verbindung mit der Trägerwelle (26, 28) eine Innenverzahnung und die Trägerwelle (26, 28) eine zur Innenverzahnung korrespondierende Außenverzahnung aufweist.

6. Vorrichtung nach Anspruch 1 oder 2,
**dadurch gekennzeichnet, dass**
die Trägerwelle (26, 28) als Hohlwelle ausgeführt ist, wobei die pneumatische oder die hydraulische Betätigungsvorrichtung (50, 52) in dem Hohlraum der Trägerwelle (26, 28) angeordnet ist, wobei in den Hohlraum der Trägerwelle (26, 28) eine durch die Antriebsvorrichtung (36, 38) angetriebene Innenwelle (100) eingreift, welche drehfest mit der Trägerwelle (26, 28) verbunden ist und relativ zur Trägerwelle (26, 28) axial verschiebbar ist, wobei eine der beiden Wellen, also die Trägerwelle (26, 28) oder die Innenwelle (100), eine Fluidkammer (56, 57) der pneumatischen oder die hydraulischen Betätigungsvorrichtung (50, 52) aufweist und die andere Welle mit einem Kolben (54, 55) der pneumatischen oder hydraulischen Betätigungsvorrichtung (50, 52) verbunden ist.

7. Vorrichtung nach einem der vorhergehenden Ansprüche,
**dadurch gekennzeichnet, dass**
die Anpresskraft durch eine Messung des Motorstroms der Antriebsvorrichtung (36, 38) ermittelbar ist und in Abhängigkeit von dem gemessenen Motorstrom der Maximaldruck der pneumatischen oder hydraulischen Betätigungsvorrichtung (50, 52) einstellbar ist.

8. Vorrichtung nach einem der Ansprüche 1 bis 5,
**dadurch gekennzeichnet, dass**
die Trägerwelle (26, 28) der Waschwalze (22, 24) ein erstes Wellenelement (88, 90) und ein zweites Wellenelement (92, 94) aufweist, wobei das erste Wellenelement (88, 90) mit einer Hülse (70, 72) drehfest verbunden ist und in den Hohlraum der Hülse (70, 72) das zweite Wellenelement (92, 94) eingreift, wobei die Hülse (70, 72) eine helixartige Steuernut (74, 76) mit einer tangentialen und axialen Erstreckung aufweist und das zweite Wellenelement (92, 94) ein mit der Steuernut (74, 76) korrespondierendes Eingriffselement (78, 80) aufweist, wobei das erste Wellenelement (88, 90) durch ein Vorspannelement (82, 84) axial gegen das zweite Wellenelement (92, 94) vorgespannt ist.

9. Vorrichtung nach Anspruch 8,
**dadurch gekennzeichnet, dass**
das zweite Wellenelement (92, 94) relativ zum ersten Wellenelement (88, 90) aus einer Anschlagstellung in eine Verstellstellung verdrehbar ist, wobei in der Anschlagstellung die durch das Vorspannelement und durch die helixartige Steuernut (74, 76) wirkende Kraft in Umfangsrichtung mindestens der durch das aus der Anpresskraft resultierende Drehmoment und durch die helixartige Steuernut (74, 76) wirkende Kraft in Umfangsrichtung entspricht, und wobei in der Verstellstellung die durch das Vorspannelement und durch die helixartige Steuernut (74, 76) wirkende Kraft in Umfangsrichtung kleiner ist als die durch das aus der Anpresskraft resultierende Drehmoment und durch die helixartige Steuernut (74, 76) wirkende Kraft in Umfangsrichtung.

10. Vorrichtung nach einem der vorhergehenden Ansprüche,
**dadurch gekennzeichnet, dass**
die Trägerwelle (26, 28) durch ein Vorspannelement (60, 62) in Richtung ihrer Drehachse und entgegen der Kraft der pneumatischen oder hydraulischen Betätigungsvorrichtung (50, 52) vorgespannt ist.

11. Vorrichtung nach Anspruch 10,
**dadurch gekennzeichnet, dass**
die Vorspannelemente (60, 62; 82, 84) Federn sind.

12. Vorrichtung nach Anspruch 11,
**dadurch gekennzeichnet, dass**
die Vorspannelement (60, 62; 82, 84) eine degressive oder progressive Federkennlinie aufweisen.

## Claims

1. Device for washing vehicles with
a washing roller (22, 24) rotating about its axis of rotation and movable in the direction of its axis of rotation,
a drive device (36, 38) which is coupled to a carrier shaft (26, 28) of the washing roller (22, 24) and via which the washing roller (22, 24) can be actuated in rotation, wherein the washing roller (22, 24) is in contact with a vehicle surface to be cleaned with a contact force during the washing process, and
a pneumatic or hydraulic actuating device (50, 52) which is coupled to the carrier shaft (26, 28) of the washing roller (22, 24) and via which the washing roller (22, 24) can be moved in the direction of its axis of rotation,
wherein the frequency and/or the stroke of the movement in the direction of the axis of rotation is adjustable as a function of the contact pressure of the washing roller (22, 24).

2. Device according to claim 1, wherein
a reciprocating movement of the washing roller (22, 24) in the direction of its axis of rotation can be generated by alternating between a minimum pressure and a maximum pressure of the hydraulic or pneumatic actuating device (50, 52).

3. Device according to claim 1 or 2, wherein
the carrier shaft (26, 28) of the washing roller (22, 24) is connected to the drive device (36, 38) in a rotationally fixed manner via a sleeve (40, 42), wherein the carrier shaft (26, 28) interacts in the cavity of the sleeve (40, 42), wherein the carrier shaft (26, 28) is connected to the sleeve (40, 42) in a rotationally fixed manner and is displaceable in the direction of the axis of rotation relative to the sleeve (40, 42).

4. Device according to claim 3, wherein
the sleeve (40, 42) comprises an elongated hole (44, 46) extending axially in the direction of the axis of rotation for rotationally fixed connection to the carrier shaft (26, 28), wherein an engagement element (48, 49) fixedly connected to the carrier shaft (26, 28) interacts with the elongated hole (44, 46).

5. Device according to claim 3, wherein
the sleeve (40, 42) comprises an internal toothing for rotationally fixed connection to the carrier shaft (26, 28) and the carrier shaft (26, 28) comprises an external toothing corresponding to the internal toothing.

6. Device according to claim 1 or 2, wherein
the carrier shaft (26, 28) is configured as a hollow shaft, wherein the pneumatic or hydraulic actuating device (50, 52) is arranged in the cavity of the carrier shaft (26, 28), wherein an inner shaft (100) driven by the drive device (36, 38) interacts in the cavity of the carrier shaft (26, 28), which inner shaft (100) is connected to the carrier shaft (26, 28) and is axially displaceable relative to the carrier shaft (26, 28), wherein one of the two shafts, i.e. the carrier shaft (26, 28) or the inner shaft (100), comprises a fluid chamber (56, 57) of the pneumatic or hydraulic actuating device (50, 52) and the other shaft is connected to a piston (54, 55) of the pneumatic or hydraulic actuating device (50, 52).

7. Device according to one of the preceding claims, wherein
the contact pressure can be determined by measuring the motor current of the drive device (36, 38) and the maximum pressure of the pneumatic or hydraulic actuating device (50, 52) can be adjusted as a function of the measured motor current.

8. Device according to any one of claims 1 to 5, wherein
the carrier shaft (26, 28) of the washing roller (22, 24) comprises a first shaft element (88, 90) and a second shaft element (92, 94), wherein the first shaft element (88, 90) is connected to a sleeve (70, 72) in a rotationally fixed manner and the second shaft element (92, 94) interacts in the cavity of the sleeve (70, 72), wherein the sleeve (70, 72) comprises a helical control groove (74, 76) with a tangential and axial extension and the second shaft element (92, 94) comprises an engagement element (78, 80) corresponding with the control groove (74, 76), wherein the first shaft element (88, 90) is axially biased against the second shaft element (92, 94) by a biasing element (82, 84).

9. Device according to claim 8, wherein
the second shaft element (92, 94) is rotatable relative to the first shaft element (88, 90) from a stop position into an adjustment position, wherein in the stop position the force acting through the biasing element and through the helical control groove (74, 76) in the circumferential direction is at least equal to the force acting through the helical control groove (74, 76) and through the torque resulting from the contact force, 76), and wherein in the adjustment position the force acting through the biasing element and through the helical control groove (74, 76) in the circumferential direction is smaller than the force acting through the torque resulting from the contact force and through the helical control groove (74, 76) in the circumferential direction.

10. Device according to one of the preceding claims, wherein
the carrier shaft (26, 28) is biased by a biasing element (60, 62) in the direction of its axis of rotation and against the force of the pneumatic or hydraulic actuating device (50, 52).

11. The device according to claim 10, wherein
the biasing elements (60, 62; 82, 84) are springs.

12. Device according to claim 11, wherein
the biasing elements (60, 62; 82, 84) comprise a degressive or progressive spring characteristic.

## Revendications

1. Appareil pour le lavage de véhicules, avec
un rouleau de lavage (22, 24) tournant autour de son axe de rotation et mobile dans la direction de son axe de rotation,
un appareil d'entraînement (36, 38) qui est couplé à un arbre de support (26, 28) du rouleau de lavage (22, 24) et par lequel le rouleau de lavage (22, 24) peut être actionné en rotation, le rouleau de lavage (22, 24) s'appliquant pendant le processus de lavage avec une force de pression contre une surface de véhicule à nettoyer, et
un dispositif d'actionnement pneumatique ou hydraulique (50, 52), qui est couplé à l'arbre de support (26, 28) du rouleau de lavage (22, 24) et par lequel le rouleau de lavage (22, 24) peut être déplacé dans la direction de son axe de rotation,
**caractérisé en ce que**
la fréquence et/ou la levée du mouvement en direction de l'axe de rotation est réglable en fonction de la force de pression du rouleau de lavage (22, 24).

2. Appareil selon la revendication 1,
**caractérisé en ce que**
un mouvement de va-et-vient du rouleau de lavage (22, 24) en direction de son axe de rotation peut être généré par une alternance entre une pression minimale et une pression maximale du dispositif d'actionnement hydraulique ou pneumatique (50, 52).

3. Appareil selon la revendication 1 ou 2,
**caractérisé en ce que**
l'arbre de support (26, 28) du rouleau de lavage (22, 24) est solidaire en rotation du dispositif d'entraînement (36, 38) par l'intermédiaire d'un manchon (40, 42), l'arbre de support (26, 28) s'engageant dans la cavité du manchon (40, 42), l'arbre de support (26, 28) étant solidaire en rotation du manchon (40, 42) et pouvant être déplacé en direction de l'axe de rotation relativement au manchon (40, 42).

4. Appareil selon la revendication 3,
**caractérisé en ce que**
le manchon (40, 42) comprend un trou oblong (44, 46) s'étendant axialement en direction de l'axe de rotation pour la liaison solidaire en rotation avec de l'arbre de support (26, 28), un élément d'engagement (48, 49) solidaire de l'arbre de support (26, 28) s'engageant dans le trou oblong (44, 46).

5. Appareil selon la revendication 3,
**caractérisé en ce que**
le manchon (40, 42) comprend une denture intérieure pour être solidaire en rotation avec l'arbre support (26, 28) et l'arbre support (26, 28) comprend une denture extérieure correspondant à la denture intérieure.

6. Appareil selon la revendication 1 ou 2,
**caractérisé en ce que**
l'arbre de support (26, 28) est réalisé sous forme d'arbre creux, le dispositif d'actionnement pneumatique ou hydraulique (50, 52) étant disposé dans la cavité de l'arbre de support (26, 28), un arbre intérieur (100) entraîné par l'appareil d'entraînement (36, 38) s'engageant dans la cavité de l'arbre de support (26, 28), lequel arbre intérieur est solidaire en rotation de l'arbre de support (26, 28) et peut être déplacé axialement relativement à l'arbre de support (26, 28), l'un des deux arbres, c'est-à-dire l'arbre de support (26, 28) ou l'arbre intérieur (100), comprenant une chambre à fluide (56, 57) du dispositif d'actionnement pneumatique ou hydraulique (50, 52) et l'autre arbre étant relié à un piston (54, 55) du dispositif d'actionnement pneumatique ou hydraulique (50, 52).

7. Appareil selon l'une des revendications précédentes,
**caractérisé en ce que**
la force de pression peut être déterminée par une mesure du courant moteur de ce dispositif d'entraînement (36, 38) et, en fonction du courant moteur mesuré, la pression maximale de ce dispositif d'actionnement pneumatique ou hydraulique (50, 52) est réglable.

8. Appareil selon l'une des revendications 1 à 5,
**caractérisé en ce que**
l'arbre de support (26, 28) du rouleau de lavage (22, 24) comprend un premier élément d'arbre (88, 90) et un deuxième élément d'arbre (92, 94), le premier élément d'arbre (88, 90) étant solidaire en rotation d'une douille (70, 72) et le deuxième élément d'arbre (92, 94) s'engageant dans la cavité de la douille (70, 72), la douille (70, 72) comprend une rainure de commande (74, 76) de type hélicoïdal avec une extension tangentielle et axiale et le deuxième élément d'arbre (92, 94) comprend un élément d'engagement (78, 80) correspondant à la rainure de commande (74, 76), le premier élément d'arbre (88, 90) étant précontraint axialement contre le deuxième élément d'arbre (92, 94) par un élément de précontrainte (82, 84).

9. Appareil selon la revendication 8,
**caractérisé en ce que**
le deuxième élément d'arbre (92, 94) peut être tourné par rapport au premier élément d'arbre (88, 90) d'une position de butée à une position de réglage, la force agissant dans la direction circonférentielle par l'élément de précontrainte et par la rainure de commande hélicoïdale (74, 76) étant, dans la position de butée, au moins égale à la force exercée par le couple résultant de la force de pression et par la rainure de commande hélicoïdale (74, 76), et dans lequel, dans la position de réglage, la force agissant dans la direction circonférentielle à travers l'élément de précontrainte et à travers la rainure de commande hélicoïdale (74, 76) est inférieure à la force agissant dans la direction circonférentielle à travers le couple résultant de la force de pression et à travers la rainure de commande hélicoïdale (74, 76).

10. Appareil selon l'une des revendications précédentes,
**caractérisé en ce que**
l'arbre de support (26, 28) est précontraint par un élément de précontrainte (60, 62) dans la direction de son axe de rotation et à l'encontre de la force du dispositif d'actionnement pneumatique ou hydraulique (50, 52).

11. Appareil selon la revendication 10,
**caractérisé en ce que**
les éléments de précontrainte (60, 62 ; 82, 84) sont des ressorts.

12. Appareil selon la revendication 11,
**caractérisé en ce que**
les éléments de précontrainte (60, 62 ; 82, 84) comprennent une caractéristique de ressort dégressive ou progressive.
